# EUROPEAN PATENT APPLICATION

(11) **EP 4 826 982 A1**
(43) Date of publication of application: **21.10.2026**
(21) Application number: 24903770.6
(22) Date of filing: 12.12.2024
(51) Int. Cl.: H02M 7/493, H02M 7/48

(54) **POWER CONVERSION DEVICE AND HEAT PUMP DEVICE**

(30) Priority: 14.12.2023 JP 2023211191
(71) Applicant: Carrier Japan Corporation, Tokyo 141-0032 (JP)
(72) Inventor: KUBOTA, Yohei, Fuji-shi, Shizuoka 416-8521 (JP); KANAMORI, Masaki, Fuji-shi, Shizuoka 416-8521 (JP); NISHIO, Motoki, Fuji-shi, Shizuoka 416-8521 (JP)
(74) Representative: Dehns
(86) International application number: PCT/JP2024/044075
(87) International publication number: WO 2025/127117

(57) **Abstract**

A power conversion device includes: a rectifier circuit that rectifies alternating-current voltage supplied from an alternating-current power source; a first capacitor that is connected to a direct-current side of the rectifier circuit; a first power converter that is connected to the first capacitor in parallel, one ends of phase winding wires of a motor being connected to phase output terminals of the first power converter, the winding wires being independent; a second power converter, the other ends of the winding wires of the motor being connected to phase output terminals of the second power converter; a second capacitor that is connected to a direct-current side of the second power converter; a reactor that is connected so as to branch from a wire that connects the alternating-current power source and the rectifier circuit; a third power converter that is connected between the reactor and the second capacitor and that suppresses harmonics; a relay that is inserted between the alternating-current power source and the third power converter; and a control unit that drives the first and second power converters and charges the second capacitor before activation of the motor is started and that turns on the relay after the charge, in which an capacitance of the second capacitor is set so as to be larger than an capacitance of the first capacitor.

## Description

### Technical Field

Embodiments of the present invention relate to a power conversion device that drives a motor having an open winding wire structure, and a heat pump device that includes the power conversion device.

### Background Art

Conventionally, there has been known a power conversion device in which a largecapacitance capacitor for direct-current smoothing has been changed to a small-capacitance capacitor for the purpose of the reduction in the size of passive components and the increase in the life of a device. For example, Patent Literature 1 discloses a configuration in which a regeneration absorption circuit in which a diode, a resistor, and a capacitor are connected in series is connected in parallel to a small-capacitance smoothing capacitor in which the maximum of a pulsing voltage is more than twice the minimum thereof, at a direct-current portion of a power conversion device that is connected to a single-phase alternating-current power source. In this configuration, the capacitance of the capacitor at the direct-current portion can be reduced, but the capacitance of the capacitor for regenerative energy absorption needs to be large to some extent for absorbing regenerative energy. When the capacitance of the capacitor is large, components may be damaged by inrush current at power-on, and therefore, an inrush prevention circuit needs to be separately provided. There are problems about the size reduction and cost reduction for a system.

Further, Patent Literature 1 describes that it is possible to reduce harmonics of an input current and improve a power factor in a single-phase input power conversion device equipped with a film capacitor having a small capacitance. However, in a three-phase input power conversion device, current flows only from a maximal phase to a minimal phase in three-phase alternating current, and therefore, the input current cannot be controlled to a sine wave simply by the switching in a power conversion circuit for motor drive.

Meanwhile, for example, as shown in Patent Literature 2, there is known a dual inverter system in which an open winding wire motor having an independent winding wire for each phase is driven by two inverters, for realizing the increase in the capacity of the device and the increase in the speed of the motor. In this dual inverter system also, the capacitor having a small capacitance can be used at the direct-current portion, but eventually, the inrush prevention circuit needs to be separately provided for the capacitor for regenerative energy absorption that requires a certain degree of capacitance. Furthermore, in the case of the connection to polyphase alternating current such as three-phase alternating current, the input current of the device cannot be controlled to a sine wave.

In contrast, Patent Literature 3 discloses a system in which a matrix converter is applied to an inverter on a primary side.

### Citation List

### Patent Literature

Patent Literature 1: Japanese Patent No. 4391768
Patent Literature 2: Japanese Patent No. 7218131
Patent Literature 3: Japanese Patent No. 5531238

### Summary of Invention

### Technical Problem

In the configuration of Patent Literature 3, the three-phase input current can be controlled to a sine wave, but components having ratings equivalent to or more than the rated capacitance of the power conversion device need to be selected as a semiconductor device for the matrix converter, a choke coil to be used for an alternating-current filter, and the like. There are problems of the increase in the whole size of the power conversion device and the increase in cost.

Hence, a power conversion device that does not require the inrush prevention circuit to be separately provided in the dual inverter system and that can suppress the increase in the whole size of the device and the increase in cost with high efficiency, and a heat pump device that includes the power conversion device are provided.

### Solution to Problem

A power conversion device in an embodiment includes: a rectifier circuit that rectifies an alternating-current voltage supplied from an alternating-current power source; a first capacitor that is connected to a direct-current side of the rectifier circuit; a first power converter that is connected to the first capacitor in parallel and that is constituted by a diode and a semiconductor switch, one ends of phase winding wires of a motor being connected to phase output terminals of the first power converter, the winding wires being independent; a second power converter that is constituted by a diode and a semiconductor switch, the other ends of the winding wires of the motor being connected to phase output terminals of the second power converter; a second capacitor that is connected to a direct-current side of the second power converter; a reactor that is connected so as to branch from a wire that connects the alternating-current power source and the rectifier circuit; a third power converter that is connected between the reactor and the second capacitor, that is constituted by a diode and a semiconductor switch, and that suppresses harmonics; a relay that is inserted between the alternating-current power source and the third power converter; and a control unit that drives the first and second power converters and charges the second capacitor before activation of the motor is started and that turns on the relay after the charge, in which an capacitance of the second capacitor is set so as to be larger than an capacitance of the first capacitor.

Further, a heat pump device in an embodiment includes: the power conversion device in the embodiment; and the motor, in which the motor drives a compressor.

### Brief Description of Drawings

[Figure 1] Figure 1 is a diagram showing the configuration of a power conversion device in a first embodiment.
[Figure 2] Figure 2 is a diagram showing the configuration of an air conditioner.
[Figure 3] Figure 3 is a flowchart showing a processing content from power-on to activation of a motor.
[Figure 4] Figure 4 is a timing chart showing a current and voltage waveforms corresponding to the processing content shown in Figure 3.
[Figure 5] Figure 5 is a diagram showing the configuration of a power conversion device in a second embodiment.
[Figure 6] Figure 6 is a flowchart showing a processing content of a regeneration absorption operation in a third embodiment.
[Figure 7] Figure 7 is a diagram showing the switching state of each inverter when the regeneration absorption operation is performed.
[Figure 8] Figure 8 is a timing chart showing currents and voltage waveforms corresponding to the processing content shown in Figure 6.
[Figure 9] Figure 9 is a diagram showing the switching state of each inverter when the regeneration absorption operation is performed in a fourth embodiment.
[Figure 10] Figure 10 is a diagram showing the configuration of a power conversion device in a fifth embodiment.

### Description of Embodiments

### (First Embodiment)

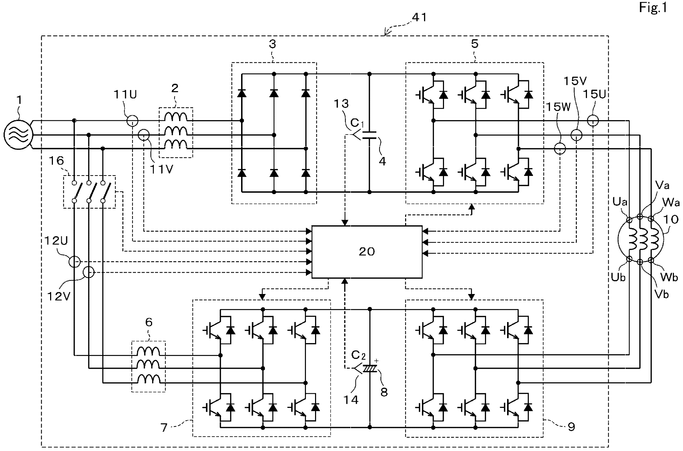

As shown in Figure 1, a power conversion device 41 in an embodiment adopts a motor 10 as a drive object. Although a three-phase permanent magnet synchronous motor, an induction machine, or the like is possible, the motor 10 is a permanent magnet synchronous motor in the embodiment. The motor 10 is a so-called open winding wire motor, three-phase winding wires thereof are not connected to each other, and both terminals of each wire are in an open state. That is, the motor 10 includes six winding wire terminals Ua, Va, Wa, Ub, Vb, Wb.

The motor 10 is driven by a dual inverter system with a first inverter 5 and a second inverter 9. The first inverter 5 and the second inverter 9 have an identical circuit configuration, and are three-phase inverters each of which includes three pairs of switching elements connected in series and in each of which each of three output terminals is an intermediate connection point between the switching elements connected in series. The phase output terminals of the first inverter 5 are connected to the winding wire terminals Ua, Va, Wa of the motor 10 respectively, and the phase output terminals of the second inverter 9 are connected to the winding wire terminals Ub, Vb, Wb of the motor 10 respectively.

A rectifier circuit 3 is connected to a three-phase alternating-current power source 1 that is a power source of the power conversion device 41, through a three-phase reactor 2 of the power conversion device 41. The rectifier circuit 3 is configured by the three-phase bridge connection of six diodes. To an output terminal of the rectifier circuit 3, a first capacitor 4 that is a film capacitor having a small capacitance and the first inverter 5 are connected.

To the second inverter 9, for example, a second capacitor 8 that is an electrolytic capacitor and both end portions on a direct-current side of a power converter 7 are connected in parallel. A high-voltage-side terminal and a low-voltage-side terminal of the first inverter 5, that is, both ends of the first capacitor 4 are not connected to the second inverter 9, and the second inverter 9 is independent. That is, between the first inverter 5 and the second inverter 9, respective output terminals are connected only through the independent phase winding wires of the motor 10.

Phase output terminals of the power converter 7 are connected to the three-phase alternating-current power source 1 through the three-phase reactor 6 and the relay 16. The first inverter 5, the second inverter 9, and the power converter 7 each are configured by the three-phase bridge connection of semiconductor switching elements to each of which a flywheel diode is connected in parallel, as exemplified by IGBTs, and correspond to first to third power converters respectively. The connection position of the relay 16 may be any of the interval between the three-phase alternating-current power source 1 and the three-phase reactor 6 and the interval between the three-phase reactor 6 and the power converter 7.

The relay 16 is not provided with a current suppression element or the like in parallel, and is merely a three-phase relay that simultaneously opens and closes power source wires for the U-phase, the V-phase, and the W-phase. Meanwhile, a relay and an inrush current prevention circuit are not provided between the three-phase power source 1 and the rectifier circuit 3. That is, the relay 16 branches to the three-phase reactor 6, between the three-phase alternating-current power source 1 and the rectifier circuit 3, and is inserted into power source wires at a section to the power converter 7.

In the U-phase and V-phase of the power source wires that connect the three-phase alternating-current power source 1 and the three-phase reactor 2, current sensors 11U, 11V are disposed. Further, in the U-phase and V-phase of the power source wires that connect the three-phase alternating-current power source 1 and the three-phase reactor 6, current sensors 12U, 12V are disposed. Voltage sensors 13, 14 detect terminal voltages of the first capacitor 4 and the second capacitor 8 respectively. Between the phase output terminals of the first inverter 5 and the winding wire terminals Ua, Va, Wa of the motor 10, current sensors 15U, 15V, 15W are disposed.

Detection signals output by the above sensors 11 to 15 are input to a control unit 20. The control unit 20 is constituted by a microcomputer and the like, and controls the switching of each IGBT that constitutes the first inverter 5, the second inverter 9, and the power converter 7, based on the detection signals of the sensors 11 to 15. Further, the control unit 20 controls the opening and closing of the relay 16. The above constituents except the motor 10 constitute the power conversion device 41.

Further, the capacitance of the second capacitor 8 is set so as to be larger than the capacitance of the first capacitor 4. The film capacitor is used as the first capacitor 4 and the electrolytic capacitor is used as the second capacitor 8, but without needing to be limited to them, the above-described condition about the capacitances only needs to be met. For example, both capacitors may be electrolytic capacitors or film capacitors.

The first capacitor 4 may have such a capacitance that a high-frequency component that is generated by the switching of the first inverter 5 and the second inverter 9 can be cut, and that a current that charges the first capacitor 4 at power-on does not exceed the current withstand of the rectifier circuit 3, more specifically, the current withstand of a diode that is an element constituting the rectifier circuit 3. This capacitance is generally about several tens of µF. Thereby, the three-phase reactor 2 can be downsized.

By setting the first capacitor 4 to such a small capacitance, the inrush current to the first capacitor 4 that is generated at the power-on of the power conversion device 41 becomes an acceptable level, and the inrush current prevention circuit becomes unnecessary. Generally, the inrush current prevention circuit is constituted by a three-phase relay or single-phase relay for large current that is inserted in series with a power source wire and a PTC thermistor that is connected in parallel to the relay. Before power-on, the relay is opened, and after power-on, only a current restricted through the PTC thermistor flows and gradually charges the capacitor. The voltage of the capacitor rises, and at the time point when a large inrush current becomes unable to flow, the relay is closed. As a result, an excessively large inrush current does not flow into the rectifier circuit or the like, and the circuit can protect the device.

On the other hand, the capacitance of the second capacitor 8 may be determined based on the compensation capacitance of the power converter 7, the output power of the second inverter 9, the ripple current that flows into the second capacitor 8, and the like. This capacitance is generally about several hundreds of µF to several thousands of µF. Since the second capacitor 8 has a certain degree of large capacitance, there is a possibility that the inrush current flows in through a rectifier circuit portion of the power converter 7 at power-on. Hence, by a later-described circuit and control, the generation of the inrush current is prevented, so that the inrush current prevention circuit is unnecessary also for the second capacitor 8. As a result, the inrush current prevention circuit is unnecessary as the whole of the power conversion device 41.

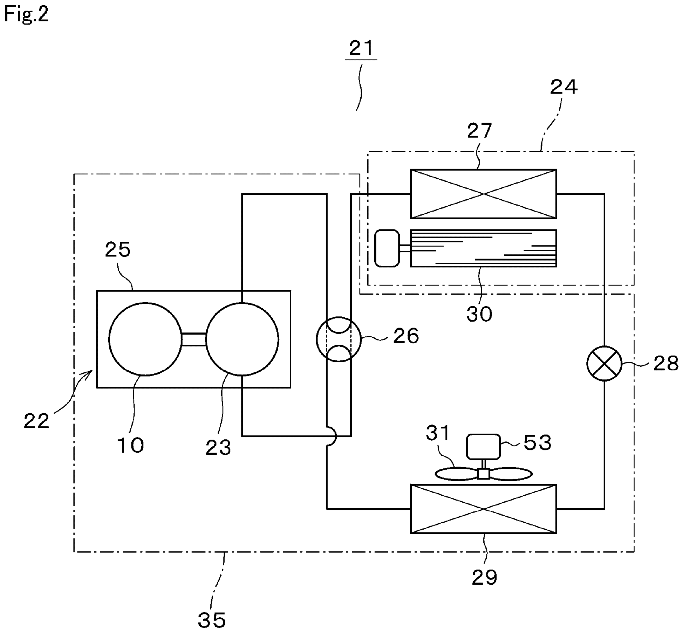

Figure 2 shows the configuration of an air conditioner that is a heat pump device to which the power conversion device 41 is applied. As the heat pump device to which the power conversion device 41 is applied, other than the air conditioner, there are a hot water generation device that serves as a water heater, a cold and hot water generation device such as a chiller, and the like. The air conditioner 21 is constituted by an indoor unit 24, an outdoor unit 35, and refrigerant pipes and signal communication wires that connect the indoor unit 24 and the outdoor unit 35. The indoor unit 24 that is installed indoors houses an indoor-side heat exchanger 27 and an indoor fan 30 in the interior. On the other hand, the outdoor unit 35 is disposed outdoors, and houses the control unit 20, a compressor 22, an outdoor-side heat exchanger 29, a four-way valve 26, a decompression device 28, an outdoor fan 31, an outdoor fan motor 53, and the like.

The compressor 22 is configured to house a compression unit 23 and a motor 10 in an identical iron closed container 25, and a rotor shaft of the motor 10 is coupled to the compression unit 23. Moreover, the compressor 22, the four-way valve 26, the indoor-side heat exchanger 27, the decompression device 28, and the outdoor-side heat exchanger 29 are connected such that a closed loop is configured by pipes as refrigerant passages. The compressor 22 is a rotary compressor with one cylinder, for example, but without being limited to this, a rotary-type compressor with multiple cylinders, a scroll-type compressor, or a reciprocation-type compressor can be also used.

At the time of air heating, the four-way valve 26 is in a state shown by solid lines, a high-temperature refrigerant compressed by the compression unit 23 of the compressor 22 is supplied from the four-way valve 26 to the indoor-side heat exchanger 27, is condensed, releases heat indoors, and heats indoor air. Thereafter, the refrigerant is decompressed by the decompression device 28, flows to the outdoor-side heat exchanger 29 at a low temperature, vaporizes by absorbing heat from the external air, and returns to the compressor 22.

On the other hand, at the time of air cooling, the four-way valve 26 is switched to a state shown by broken lines. Therefore, the high-temperature refrigerant compressed by the compression unit 23 of the compressor 22 is supplied from the four-way valve 26 to the outdoor-side heat exchanger 29, releases heat outdoors, and is condensed. Thereafter, the refrigerant is decompressed by the decompression device 28, flows to the indoor-side heat exchanger 27 at a low temperature, vaporizes by absorbing heat from the indoor air, cools the indoor air, and returns to the compressor 22. Moreover, to the heat exchangers 27, 29 on the indoor side and the outdoor side, air blowing is performed by the indoor fan 30 and the outdoor fan 31 respectively, and by the air blowing, the heat exchange between the heat exchangers 27, 28 and the indoor and outdoor airs is efficiently performed.

Next, the operation of the embodiment will be described. The control unit 20 that controls the whole of the power conversion device 41 is provided. For example, the control unit 20 performs the operation/stop of the compressor 22, that is, the motor 10, based on an instruction from an unillustrated indoor-side control unit on the indoor unit 24 side. During the operation of the compressor 22, the control unit 20 performs vector arithmetic using the current values detected by the current sensors 15U, 15V, 15W and the terminal voltages of the first capacitor 4 and the second capacitor 8 detected by the voltage sensors 13, 14. Based on the arithmetic result, the control unit 20 coordinates and operates the switching elements of the first inverter 5 and the second inverter 9, and performs variable speed drive to the motor 10 by causing a desired current to flow through each winding wire of the motor 10.

Furthermore, during the operation of the motor 10, the control unit 20 causes the power converter 7 to operate as an active filter circuit, so as to suppress and reduce the harmonics that flows through the power source wire. The control unit 20 extracts harmonic currents from currents that flow in the phases of the reactor 2 and that are detected by the current sensors 11U, 11V, and controls the operation of the switching elements of the power converter 7 such that reactor currents in the phases detected by the current sensors 12U, 12V become correction currents for cancelling harmonic currents that flow in the U-phase, the V-phase, and the W-phase, in consideration of the terminal voltage of the second capacitor 8. By the active filter circuit operation of the power converter 7, power source harmonics can be suppressed, and the current that flows from the rectifier circuit 3 to the alternating-current power source 1 side can approximate a sine wave.

The second capacitor 8 is used as a power source for the correction currents when the power converter 7 functions as the active filter circuit, and therefore, has a certain degree of capacitance. Moreover, when the power converter 7 operates as the active filter circuit, a power source having such a high voltage that the harmonics can be compensated is necessary. Therefore, it is desirable that the terminal voltage of the second capacitor 8 that is the power source at the time of the active filter circuit operation is kept at a predetermined value or more. Hence, during the active filter circuit operation, in parallel, the control unit 20 may control the on-state and off-state of the switching elements of the power converter 7 such that the terminal voltage of the second capacitor 8 is kept at a certain value or more. Further, when the motor 10 is in a state where the generation amount of the harmonic current is very small, as exemplified by a low-load state, the control unit 20 may detect that, stop the power converter 7, and stop the active filter circuit operation, to lessen the switching loss of the switching elements of the power converter 7.

By configuring the power conversion device 41 as described above, the controllability of the motor that uses the dual inverter constituted by the first inverter 5 and the second inverter 9 and the motor 10 having the open winding wire configuration is enhanced. The power source harmonics can be suppressed by causing the power converter 7 to operate as the active filter circuit by performing the switching control such that the current that flows from the rectifier circuit 3 to the alternating-current power source 1 side approximates a sine wave. That is, since the voltage is applied to the winding wire of the motor 10 by the two inverters 5, 9, it is possible to expand the operation range of the motor 10. Further, since the voltage to be applied to the winding wire of the motor 10 has multiple levels, it is possible to reduce the iron loss that is generated in the motor 10.

Furthermore, by devising the drive method for the two inverters 5, 9 by the control unit 20, it is possible to perform such a control that the power to be applied to the motor 10 is constant, and to expand an operation range in a high-speed region by reactive power injection. Further, by connecting a direct-current portion negative electrode side of the power converter 7 and a direct-current portion negative electrode side of the second inverter 9, a common reference voltage is adopted as reference voltages for the circuits. Thereby, it is possible to decrease insulation spots in the drive power source, and to prevent the increase in circuit size and the increase in cost.

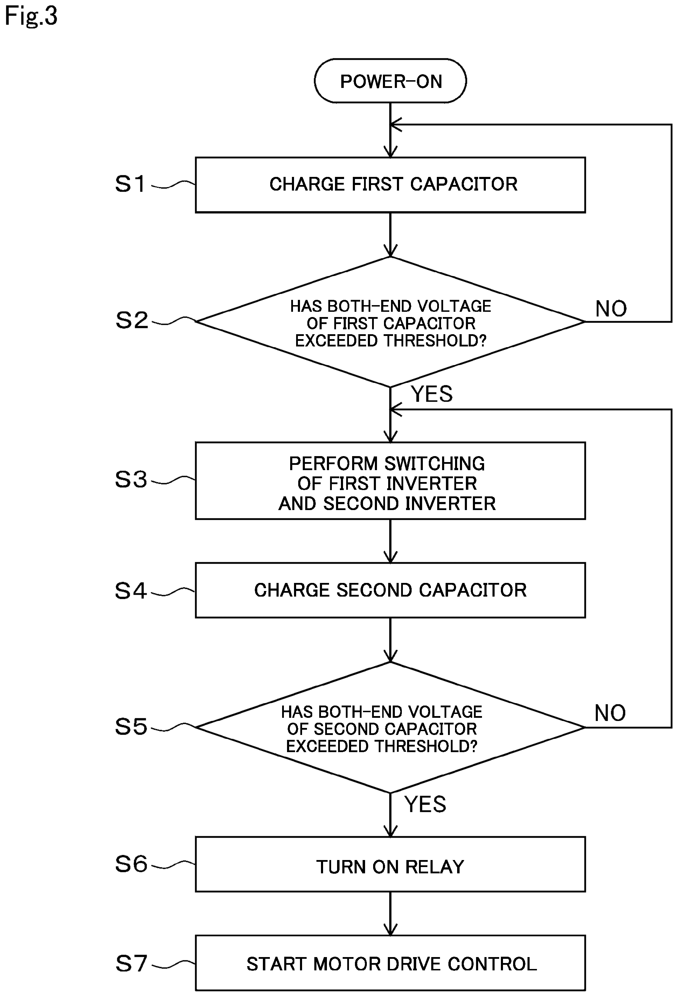

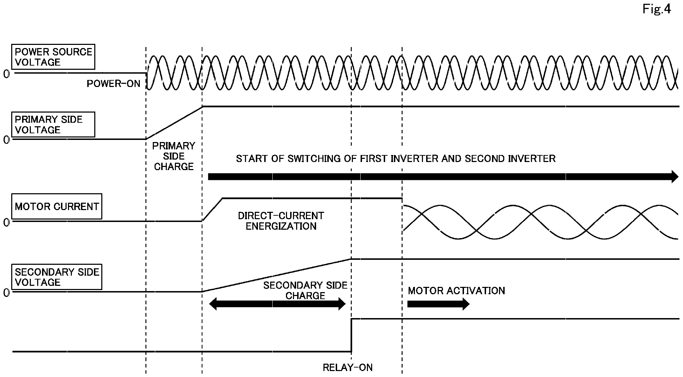

A control by which the inrush current prevention circuit at the power-on of the power conversion device 41 becomes unnecessary will be described with reference to Figure 3 and Figure 4. The time of the power-on of the power conversion device 41 can include the time of wire connection for installation, the time when an unillustrated breaker provided between the three-phase alternating-current power source 1 and the power conversion device 41 is powered on from a release state, and the time of the recovery of the three-phase alternating-current power source 1 from electric outage. In the initial state of the power conversion device 41, the relay 16 is in the off-state at the time of the non-connection of the three-phase alternating-current power source 1, that is, at the time of non-power-on.

When the alternating-current power source is powered on from the three-phase alternating-current power source 1 to the power conversion device 41, the first capacitor 4 is charged through the rectifier circuit 3 (S1). When the terminal voltage of the first capacitor 4 has exceeded a threshold (YES in S2), the control unit 20 starts the switching of the first and second inverters 5, 9 (S3). On this occasion, a switching pattern in which the direct-current energization of the motor 10 is performed is adopted. The direct-current energization is generally an energization that is used for rotor positioning before the activation of the motor 10, and is an energization in which only a particular phase in the motor 10 is energized and a rotating magnetic field is not made. In an energization pattern for the direct-current energization, the motor 10 does not rotate. In a switching pattern for the direct-current energization on this occasion, a PWM duty ratio is previously adjusted such that a large current does not flow into the second capacitor 8. Thereby, the second capacitor 8 is gradually charged through the first and second inverters 5, 9 (S4), and a temporary and excessively large current does not flow through the rectifier circuit 3.

Subsequently, when the terminal voltage of the second capacitor 8 has exceeded a threshold (YES in S5), the control unit 20 turns on the relay 16 (S6). At this time point, the both-end voltage of the second capacitor 8 has already risen to a sufficiently high voltage, and therefore, a large current does not flow to a rectification portion of the power converter 7 even when the relay 16 is turned on. Then, the drive control of the motor 10 is started (S7).

The threshold for the terminal voltage of the second capacitor 8 in step S5 may be set to a value roughly equivalent to a value resulting from rectifying the alternating-current power source voltage, or such a threshold level that an excessively large inrush current does not flow into the second capacitor 8 even at power-on may be previously confirmed by experiments or the like, and may be set. The charges of the capacitors in steps S1 and S4 are naturally performed and are not actively controlled by the control unit 20, but are described in the flowchart for facilitating understanding of the explanation of the operation.

As described above, when the relay 16 is in the off-state at power-on, only the first capacitor 4 having a relatively small capacitance is charged. Since the first capacitor 4 has a small capacitance, the inrush current that is generated at the time of the charge does not become such a large current that the current exceeds the current withstand of an element constituting the rectifier circuit 3 and destroys the element. When the first capacitor 4 has been charged to some extent, the second capacitor 8 is gradually charged through the open winding wire motor 10 and the first capacitor 4, by the direct-current energization drive of the first and second inverters 5, 9. On this occasion, by the switching patterns of the first and second inverters 5, 9, the charge current of the second capacitor 8 is controlled so as not to become excessively large.

Thereafter, the relay 16 is turned on at the timing when the both-end voltage of the second capacitor 8 has become roughly equivalent to the value resulting from rectifying the alternating-current power source voltage, and thereby, the second capacitor 8 having a relatively large capacitance can transition to a steady operation while an excessively large charge current does not flow from the power converter 7 side. Accordingly, the embodiment makes it possible to safely perform the transition from the power-on to the steady operation without providing a protection circuit such as the inrush current prevention circuit.

Further, the relay 16 is provided in the middle of the wires through which power is supplied only to the third power converter 7 that operates as the active filter circuit and the second capacitor 8, and therefore, only a smaller current than the current that flows through the reactor 2 for the drive of the motor by the first and second inverters 5, 9 flows. Accordingly, it is possible to use a relay having a small size and a low rated current value, and to contribute to the reduction in the size of the device.

### (Second Embodiment)

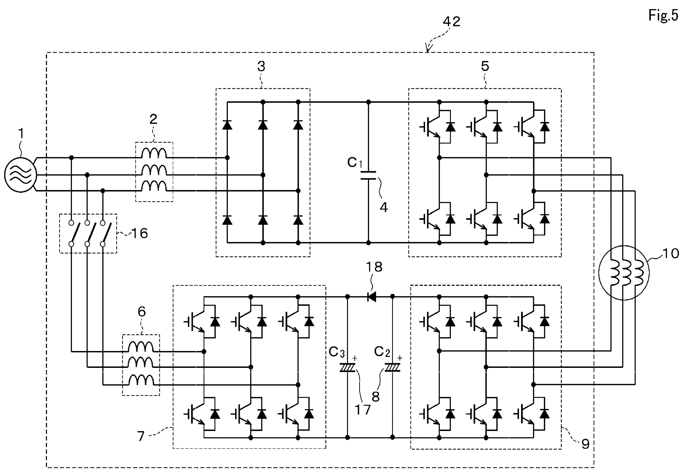

Hereinafter, identical portions to the first embodiment are denoted by identical reference characters, for omitting descriptions, and different portions are described. In the drawings for power conversion devices of embodiments shown hereinafter, the illustration of the sensors 11 to 15 and the control unit 20 is omitted. In a power conversion device 42 in a second embodiment shown in Figure 5, a third capacitor 17 is connected to the direct-current portion of the power converter 7 that operates as the active filter circuit. A negative electrode terminal of the second capacitor 8 and a negative electrode terminal of the third capacitor 17 are commonly connected. An anode of a diode 18 is connected to a positive electrode terminal of the second capacitor 8, and a cathode is connected to a positive electrode terminal of the third capacitor 17.

In the second embodiment configured as described above, by connecting the direct-current portion negative electrode side of the power converter 7 and the direct-current portion negative electrode side of the second inverter 9 and inserting the diode 18 between the second capacitor 8 and the positive electrode terminal of the third capacitor 17, the regenerative energy generated at the time of the stop of the motor 10 can be absorbed also by the third capacitor 17. Accordingly, the capacitances of the first and second capacitors 4, 8 can be reduced.

### (Third Embodiment)

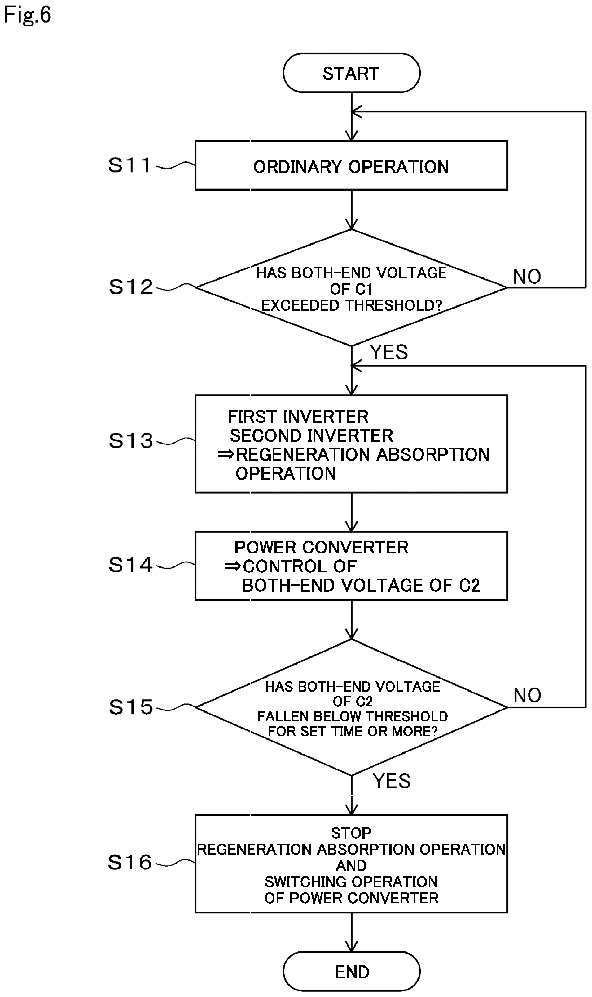

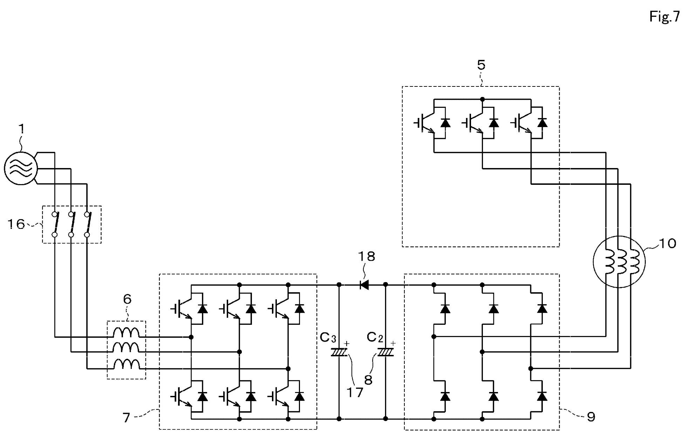

A third embodiment shows an example of a regeneration absorption operation in the power conversion device 41 or 42. Figure 6 is an operation flow at the time of the regeneration absorption, and Figure 7 shows only elements that are energized in the first inverter 5 and the second inverter 9 when the regeneration absorption operation is performed. During the execution of ordinary operation (S11), when the both-end voltage of the first capacitor 4 or the like has exceeded a previously determined threshold (YES in S12), the control unit 20 judges that the regeneration by the motor 10 has occurred, and performs the regeneration absorption operation shown in Figure 5 (S13).

Further, at this time, the switching control of the power converter 7 is performed, and the both-end voltage of C2; the second capacitor 8 is controlled (S14). Namely, the power converter 7 operates as a power regeneration PWM rectifier. That is, the switching control of the power converter 7 is performed, and the regenerative power is returned to the three-phase alternating-current power source 1 side, such that the both-end voltage of the second capacitor 8 that absorbs the regenerative power of the motor 10 becomes a predetermined voltage lower than the rated voltage value of the element. At the time of the regeneration absorption operation, the first and second inverters 5, 9 do not perform the drive of the motor 10, and therefore no harmonics are generated. Therefore, the power converter 7 does not need to perform the suppression operation for harmonics, and there is no problem, even when the power converter 7 stops the active filter circuit operation and operates as the power regeneration PWM rectifier instead. Moreover, before the both-end voltage has not fallen below a threshold for a set time or more (NO in S15), the return to step S13 is performed, and the regeneration absorption operation is continued. When the both-end voltage has fallen below the threshold for the set time or more (YES in S15), the regeneration absorption operation and the switching control of the power converter 7 are stopped (S16).

In the regeneration absorption operation in step S13, a neutral point of the motor 10 is formed by turning on all IGBTs on an upper arm side and turning off all IGBTs on a lower arm side in the first inverter 5. At this time, power does not flow from the motor 10 into the first capacitor 4. On the other hand, the second inverter 9 becomes equivalent to the configuration of the rectifier circuit 3 by turning off all the IGBTs. Thereby, power flows from the motor 10 into the second capacitor 8. In this way, the regeneration absorption operation is performed at the time of the regeneration by the motor 10, and thereby, the regenerative power can be absorbed simply by the second capacitor 8 having a relatively large capacitance. By adjusting the capacitance of the second capacitor 8 to about several hundreds of µF to several thousands of µF, it is possible to prevent an overvoltage from being generated also at the time of regeneration.

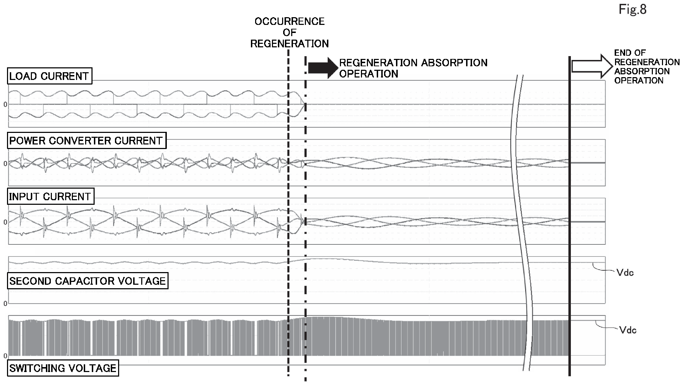

Figure 8 shows currents and voltage waveforms at portions in the case where the flow shown in Figure 6 is executed. Although there are current waveforms in the three phases, the distinction of the three phases is not necessary here, and therefore, the waveforms are not separately shown. In the figure, "load current" is the current that flows through the three-phase reactor 2, and "input current" is the current that is input from the three-phase alternating-current power source 1 to the three-phase reactors 2, 6. "Power converter current" is the current that flows through the power converter 7, that is, the current that flows through the three-phase reactor 6. "Second capacitor voltage" is the terminal voltage of the second capacitor 8, and "switching voltage" is the collector-emitter voltage of the IGBT that constitutes the power converter 7.

In Figure 8, the regeneration by the motor 10 occurs, and when the unillustrated voltage of the first capacitor 4 has risen to the threshold, the regeneration absorption operation is started. When the regeneration absorption operation is started, the both-end voltage of the second capacitor 8 rises once, but in parallel, the power converter 7 operates as the power regeneration PWM rectifier. Therefore, the regenerative current having flowed into the second capacitor 8 is avoided from rising to an extremely large current, by the regeneration to the three-phase alternating-current power source 1. Thereafter, when the regeneration by the motor 10 ends, the both-end voltage of the second capacitor 8 decreases due to the power regeneration PWM rectifier operation by the power converter 7. Then, when the time during which the both-end voltage of the second capacitor 8 has fallen below the threshold has become the set time or more, the switching of the power converter 7 stops, and the regeneration absorption and the power regeneration operation end. As a result, the switching voltage is fixed at Vdc that is a direct-current voltage after the full-wave rectification and smoothing of the alternating current of the three-phase alternating-current power source 1, all of the load current, the input current, and the power converter current become "0", and the regeneration absorption operation ends. While the power converter 7 operates as the power regeneration PWM rectifier, a sine wave current that is synchronous with the voltage of the three-phase alternating-current power source 1 flows as the input current.

Further, in the end judgement for the regeneration absorption operation in step S15, the judgement of "YES" may be made in the case where the voltage of the second capacitor 8 shown in Figure 8 has become a stable state. Further, the actual time of the generation of the regenerative power is short, and therefore, the judgment about the end may be performed based on the lapse time from the start of the regeneration absorption operation. The threshold in step S15 does not always need to be set to the same value as the threshold in step S13.

### (Fourth Embodiment)

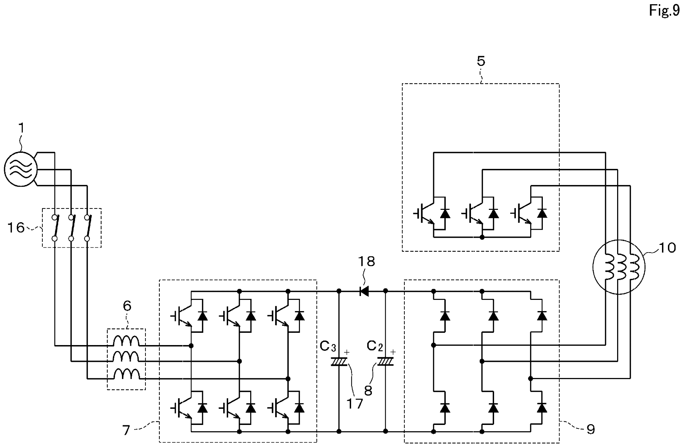

A fourth embodiment also shows an example of the regeneration absorption operation in the power conversion device 41 or 42. Figure 9 shows only elements that are energized in the first inverter 5 and the second inverter 9 when the regeneration absorption operation is performed, similarly to Figure 7. The difference from the third embodiment is that all the IGBTs on the upper arm side are turned off and all the IGBTs on the lower arm side are turned on in the first inverter 5. This case is effective in the case where the drive power source for the second inverter 9 is constituted by a bootstrap circuit, because the IGBTs on the lower arm side are in the on-state for a long time.

### (Fifth Embodiment)

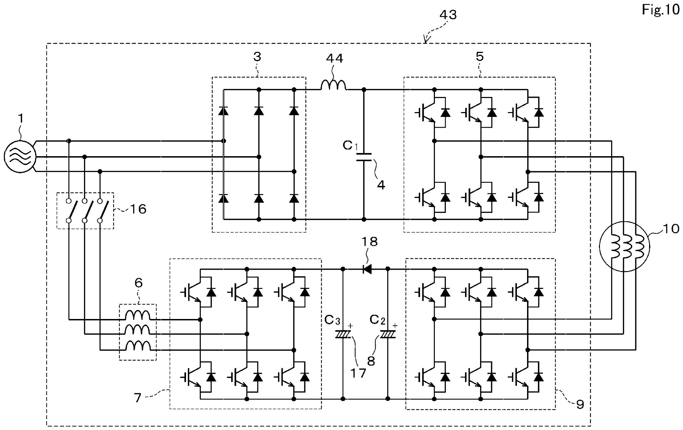

A power conversion device 43 in a fifth embodiment shown in Figure 10 has a configuration in which the three-phase reactor 2 is excluded from the power conversion device 41 and a reactor 44 is inserted on the positive electrode side between the rectifier circuit 3 and the first capacitor 4. By inserting the reactor 44 into the direct-current portion in this way, the number of reactors that are used can be reduced compared to the case of the insertion into the alternating-current portion. Reactors that are inserted into the direct-current portion may be only on a line on a high-potential side as shown in Figure 10, or may be dispersedly disposed on both ends of the high-potential side line and a low-potential side line. In the case of this dispersed disposition, the inductance of each reactor needs to be only about half compared to the case of the insertion of only one reactor.

### (Other Embodiment)

The semiconductor switch is not limited to the IGBT, and for example, may be a power MOSFET or the like.

The alternating-current power source may have a single phase.

When the magnitude relation between the capacitances C1, C2 of the first and second capacitors is set to (C1 < C2), it is not always necessary that the first capacitor 4 is a film capacitor and the second capacitor 8 is an electrolytic capacitor. The second capacitor may be a super capacitor such as an electric accumulator, or an electrolytic double-layered capacitor.

In step S3 in Figure 3, the second capacitor 8 is charged by outputting the switching pattern in which the direct-current energization of the motor 10 is performed by the first and second inverters 5, 9, before the relay 16 is turned on. The energization pattern on this occasion is not limited to the switching pattern for the direct-current energization, and only needs to be a switching pattern that allows the second capacitor 8 to be gradually charged without rotating the motor 10 using the first and second inverters 5, 9.

The heat pump device is not limited to the air conditioner. Further, the power conversion device may be applied to other than the heat pump device.

Some embodiments of the present invention have been described. The embodiments have been presented as examples, and are not intended to limit the scope of the invention. These novel embodiments can be carried out in various other modes, and a variety of omissions, replacements, and alterations can be performed without departing from the gist of the invention. These embodiments and modifications thereof are included in the scope and gist of the invention, and are included in a scope equivalent to the invention described in the claims.

### Reference Signs List

In the drawings, reference numeral 1 denotes a three-phase alternating-current power source, reference numeral 2 denotes a three-phase reactor, reference numeral 3 denotes a rectifier circuit, reference numeral 4 denotes a first capacitor, reference numeral 5 denotes a first inverter (first power converter), reference numeral 6 denotes a three-phase reactor, reference numeral 7 denotes a power converter (third power converter), reference numeral 8 denotes a second capacitor, reference numeral 9 denotes a second inverter (second power converter), reference numeral 10 denotes a motor, reference numeral 16 denotes a relay, reference numeral 20 denotes a control unit, reference numeral 21 denotes an air conditioner, reference numeral 22 denotes a compressor, reference numeral 31 denotes a fan, reference numerals 41 to 43 denote power conversion devices, and reference numeral 44 denotes a reactor.

## Claims

1. A power conversion device comprising:
a rectifier circuit that rectifies alternating-current voltage supplied from an alternating-current power source;
a first capacitor that is connected to a direct-current side of the rectifier circuit;
a first power converter that is connected to the first capacitor in parallel and that is constituted by a diode and a semiconductor switch, one ends of phase winding wires of a motor being connected to phase output terminals of the first power converter, the winding wires being independent;
a second power converter that is constituted by a diode and a semiconductor switch, the other ends of the winding wires of the motor being connected to phase output terminals of the second power converter;
a second capacitor that is connected to a direct-current side of the second power converter;
a reactor that is connected so as to branch from a wire that connects the alternating-current power source and the rectifier circuit;
a third power converter that is connected between the reactor and the second capacitor, that is constituted by a diode and a semiconductor switch, and that suppresses harmonics;
a relay that is inserted between the alternating-current power source and the third power converter; and
a control unit that drives the first and second power converters and charges the second capacitor before activation of the motor is started and that turns on the relay after the charge, wherein
an capacitance of the second capacitor is set so as to be larger than an capacitance of the first capacitor.

2. The power conversion device according to claim 1, wherein the first capacitor is a film capacitor, and the second capacitor is an electrolytic capacitor.

3. The power conversion device according to claim 1, wherein the first capacitor has such a capacitance that a high-frequency component that is generated by switching of the first power converter and the second power converter can be cut, and that a current that charges the first capacitor at power-on does not exceed a current withstand of the rectifier circuit.

4. The power conversion device according to claim 1, wherein the control unit causes the third power converter to operate as an active filter circuit.

5. The power conversion device according to claim 1, comprising a third capacitor that is connected to a direct-current portion of the third power converter, wherein
a negative electrode terminal of the second capacitor and a negative electrode terminal of the third capacitor are commonly connected, and
the power conversion device further comprises a diode in which an anode is connected to a positive electrode terminal side of the second capacitor and a cathode is connected to a positive electrode terminal side of the third capacitor.

6. The power conversion device according to claim 1, wherein when power is regenerated by the motor, the control unit performs a regeneration absorption operation of turning off all semiconductor switches of the second power converter, turning on or off the semiconductor switch of the first power converter, short-circuiting one of a winding wire ends of the motor, and causing the second capacitor to absorb the regenerative power.

7. The power conversion device according to claim 6, wherein when the control unit detects that a both-end voltage of the first capacitor has exceeded a previously determined threshold, the control unit performs the regeneration absorption operation.

8. The power conversion device according to claim 6, wherein when the control unit performs the regeneration absorption operation, the control unit causes the third power converter to operate as a power regeneration PWM rectifier that regenerates power to the alternating-current power source.

9. The power conversion device according to claim 1, comprising a reactor that is inserted between the alternating-current power source and the rectifier circuit.

10. The power conversion device according to claim 1, comprising a reactor that is inserted between the rectifier circuit and the first power converter.

11. A heat pump device comprising:
the power conversion device according to any one of claims 1 to 10; and
the motor, wherein
the motor drives a compressor.
